(19) Europäisches Patentamt
European Patent Office
Office européen des brevets

(11) **EP 2 786 110 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(21) Anmeldenummer: **12794306.6**

(22) Anmeldetag: **27.11.2012**

(51) Int Cl.:
***G01M 13/04*** *(2006.01)*

(86) Internationale Anmeldenummer:
**PCT/EP2012/073758**

(87) Internationale Veröffentlichungsnummer:
**WO 2013/079492 (06.06.2013 Gazette 2013/23)**

(54) **VERFAHREN ZUR ÜBERWACHUNG DES ZUSTANDS EINES EINEN ELEKTROMOTOR AUF EINER WELLE FÜHRENDEN LAGERS**

METHOD FOR MONITORING THE STATE OF A BEARING GUIDING AN ELECTRIC MOTOR ON A SHAFT

PROCÉDÉ DE SURVEILLANCE DE L'ÉTAT D'UN PALIER GUIDANT UN MOTEUR ÉLECTRIQUE SUR UN ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2011 DE 102011087341**

(43) Veröffentlichungstag der Anmeldung:
**08.10.2014 Patentblatt 2014/41**

(73) Patentinhaber: **Continental Automotive GmbH 30165 Hannover (DE)**

(72) Erfinder:
• **BAUMANN, Thomas 93049 Regensburg (DE)**
• **TÖNS, Matthias 93049 Regensburg (DE)**

(56) Entgegenhaltungen:
**WO-A1-2011/011573 DE-A1-102007 011 733**

EP 2 786 110 B1

## Beschreibung

Die vorliegende Erfindung betrifft ein Verfahren zur Überwachung des Zustands eines einen Elektromotor auf einer Welle führenden Lagers, beispielsweise in einem Kraftfahrzeug.

In modernen Kraftfahrzeugen werden zunehmend Elektromotoren auch als Antriebsmotoren eingesetzt. Zur Regelung des Elektromotors sind in derartigen Elektro- oder Hybridfahrzeugen häufig Drehwinkelsensoren verbaut, die Drehzahl und Drehwinkel erfassen.

Derartige Drehwinkelsensoren sind beispielsweise aus der DE 102 10 372 A1 bekannt.

Der Rotor des Elektromotors ist drehbar auf einer Welle gelagert, deren eines Ende typischerweise eine Schrägverzahnung aufweist. Der Rotor hat ein Spiel, das sich aus den Toleranzen der mechanischen Konstruktion ergibt. Wenn sich dieses Spiel infolge von Alterung, Konstruktionsfehlern oder Defekten erhöht, können Beschädigungen oder sogar ein Blockieren des Rotors die Folge sein.

Die Druckschrift DE 10 2007 011 733 A1 beschreibt ein Verfahren zum Betrieb eines Kompressors mit einem Rotor, der relativ zu dem Gehäuse des Kompressors in einer definierten axialen Position angeordnet ist. Um eine nicht autorisierte Wartungs- und Reparaturarbeit an dem Kompressor feststellen zu können, wird der Abstand zwischen dem Rotor und dem Gehäuse periodisch gemessen und mit einem vorgegebenen Grenzwert verglichen.

Die Druckschrift WO 2011/011573 A1 beschreibt ein Verfahren zur Ermittlung vom Spiel und Verschleiß eines Lagers einer Drehmaschine.

Aufgabe der Erfindung ist es daher, ein Verfahren anzugeben, das es erlaubt, den Zustand des Lagers zuverlässig zu überwachen und Defekte sowie Verschleiß rechtzeitig zu erkennen.

Gemäß einem Aspekt der Erfindung wird ein Verfahren zur Überwachung des Zustands eines einen Elektromotor auf einer Welle führenden Lagers angegeben, wobei das Verfahren folgende Verfahrensschritte aufweist: Es wird ein erstes Maß $m_1$ für einen ersten Abstand $a_1$ in axialer Richtung der Welle und zwischen einem Bezugspunkt an einem Gehäuse des Elektromotors und einem Bezugspunkt an einem Rotor des Elektromotors zu einem ersten Zeitpunkt $t_1$ bestimmt, an dem der Elektromotor ein negatives Drehmoment aufweist.

Dabei wird unter dem Gehäuse hier und im Folgenden die Gesamtheit der Bauteile verstanden, die mit dem ortsfesten Stator verbunden sind und gegen die die Motorwelle mit dem Rotor drehbar gelagert ist, wobei auch der Stator selbst eingeschlossen sein soll.

Zudem wird ein zweites Maß $m_2$ für einen zweiten Abstand $a_2$ in axialer Richtung der Welle und zwischen dem Bezugspunkt am Gehäuse und dem Bezugspunkt am Rotor zu einem zweiten Zeitpunkt $t_2$ bestimmt, an dem der Elektromotor ein positives Drehmoment aufweist. Es wird dann die Differenz $m_1-m_2$ zwischen dem ersten und dem zweiten Maß $m_1$, $m_2$ berechnet und mit einem vorgegebenen Schwellenwert $m_s$ verglichen.

Abhängig von dem Vergleichsergebnis von der Differenz $m_1-m_2$ mit dem Schwellenwert $m_s$ wird dann ein kritischer Zustand des Lagers erkannt.

Dabei wird beispielsweise auf einen kritischen Zustand des Lagers geschlossen, wenn der Betrag, nämlich der Absolutwert $|m_1-m_2|$ der Differenz $m_1-m_2$ der beiden Masse $m_1$, $m_2$ den Betrag, also den Absolutwert $|m_s|$ des Schwellenwertes $m_s$ überschreitet.

Dabei wird ausgenutzt, dass der mit der Welle verbundene Rotor sich im Motor in axialer Richtung hin- und her bewegen kann, je nach Vorzeichen des Drehmoments. Ursache für dieses Spiel kann die Schrägverzahnung der Motor- und Getriebewellen sein, die einen axialen Bewegungsspielraum bei dem Rotor beziehungsweise bei dem Lager lässt.

Ein solches Verhalten kann aber auch bei Wellen ohne Schrägverzahnung auftreten infolge von Nutschrägung im Blechpaket des Rotors bzw. Stators, da auch hier axiale Kräfte auftreten, die den Rotor verschieben. Hinzu kommt das eigentliche Lagerspiel des die Welle in dem Gehäuse führenden Lagers.

Wenn das Fahrzeug elektrisch beschleunigt wird, wird der Rotor mit der Welle in die eine Richtung (beispielsweise auf das Getriebe zu) bewegt. Wenn das Fahrzeug elektrisch abgebremst wird, wird der Rotor in die andere Richtung (beispielsweise vom Getriebe weg) bewegt.

Aufgrund der Bewegung verändert sich der Abstand a zwischen dem Bezugspunkt am Gehäuse und dem am Rotor, wenn das Drehmoment sein Vorzeichen wechselt und sich die Welle mit dem Rotor gegen das Gehäuse verschiebt. Typischerweise ist eine relativ geringe Kraft ausreichend, um die Welle jeweils in den Anschlag zu drücken. Das heißt, die Welle bewegt sich nach einem Vorzeichenwechsel des Drehmoments oder nach dem Anfahren verhältnismäßig schnell in eine ihrer Endlagen. Die durch das Verfahren bestimmte Differenz $m_1-m_2$ ist daher ein zuverlässiges Maß für den Abstand zwischen diesen beiden Endlagen und damit für das mechanische Spiel. Wenn dieses Spiel aufgrund von Alterung oder Defekten zu groß wird, wird der Zustand als kritisch erkannt.

Das Verfahren erlaubt auf einfache, berührungsfreie Weise die ständige Überwachung des Lagers und seines Verschleißzustands. Wird der gesetzte Schwellenwert überschritten, kann beispielsweise das Drehmoment reduziert und der Fahrer über eine Warnlampe auf das Problem aufmerksam gemacht werden. Er kann somit unmittelbar nach Auftreten eines kritischen Zustands eine Werkstatt aufsuchen, so dass ein Liegenbleiben des Fahrzeugs vermieden wird. In der Werkstatt kann dann eine Diagnose des Verschleißzustands erstellt werden, ohne dass der Antrieb zerlegt werden muss.

In einer Ausführungsform wird die Bestimmung des ersten Maßes $m_1$ für den ersten Abstand $a_1$ und/oder

des zweiten Maßes $m_2$ für den zweiten Abstand $a_2$ nur oberhalb einer Mindestdrehzahl des Elektromotors durchgeführt. Damit wird erreicht, dass wenig aussagekräftige Werte - im Bereich sehr kleiner Drehmomente oder unmittelbar nach einem Vorzeichenwechsel des Drehmoments, wenn die Welle ihre neue Endlage möglicherweise noch nicht erreicht hat - nicht für die Überwachung herangezogen werden.

In einer Ausführungsform werden als Maße $m_1$, $m_2$ für die Abstände $a_1$, $a_2$ die Abstände $a_1$, $a_2$ selbst verwendet. Diese können mittels an sich bekannter Abstandssensoren, beispielsweise induktiv, bestimmt werden.

Alternativ oder zusätzlich können als Maße $m_1$, $m_2$ für die Abstände $a_1$, $a_2$ die Amplituden $A_1$, $A_2$ des Signals eines den Drehwinkel des Elektromotors überwachenden Drehwinkelsensors verwendet werden. Somit umfasst das Verfahren folgende Schritte: Ermittlung einer ersten Amplitude $A_1$ des Signals des Drehwinkelsensors zu einem ersten Zeitpunkt $t_1$, an dem der Elektromotor ein negatives Drehmoment aufweist; Ermittlung einer zweiten Amplitude $A_2$ des Signals des Drehwinkelsensors zu einem zweiten zeitpunkt $t_2$, an dem der Elektromotor ein positives Drehmoment aufweist; Vergleich des Betrags $|A_1\text{-}A_2|$ der Differenz $A_1\text{-}A_2$ mit einem Schwellenwert $A_s$, wobei auf einen kritischen Zustand geschlossen wird, wenn der Betrag $|A_1\text{-}A_2|$ der Differenz $A_1\text{-}A_2$ den Schwellenwert $A_s$ überschreitet.

Dabei soll unter der Amplitude A hier nicht nur im strengen Sinne der Scheitelwert des sinusförmigen Signals verstanden werden, sondern auch davon abgeleitete Größen wie der Effektivwert oder die nach Pythagoras berechnete Gesämtamplitude

$$\mathrm{A = \sqrt{(sin^2(x) + cos^2(x))}.}$$

Bei diesem Verfahren wird ausgenutzt, dass die Signalamplituden der ohnehin im Fahrzeug verbauten Drehwinkelsensoren abstandsabhängig sind. Derartige Drehwinkelsensoren weisen typischerweise ein Sensorelement auf, das am Gehäuse angeordnet ist, und eine oder mehrere Sensorspuren am Rotor. Sie liefern ein Sinus-/Cosinus-Signal, das je nach Ausgestaltung der Sensorspur mehrere Perioden pro mechanischer Umdrehung aufweist.

Vorzugsweise ist der Bezugspunkt am Gehäuse des Elektromotos ein Punkt am Sensorelement des Drehwinkelsensors und der Bezugspunkt am Rotor des Elektromotos ein Punkt an einer Sensorspur des Drehwinkelsensors.

Dabei können zur Bestimmung der Amplituden $A_1$, $A_2$ jeweils die Amplituden des Signals über eine ganzzahlige Anzahl n mechanischer Umdrehungen des Rotors gemittelt werden. Da das Sinus-/Cosinus-Signal je nach Ausgestaltung der Sensorspur mehrere Perioden pro mechanischer Umdrehung hat, die beispielsweise infolge leichten Taumelns des Rotors nicht ganz gleich sein müssen, erhält man durch die Mittelung verlässlich vergleichbare Werte für die Amplituden.

Alternativ können auch zur Bestimmung der Amplituden $A_1$, $A_2$ Amplituden ausgewählt werden, die sich voneinander um eine ganzzahlige Anzahl n mechanischer Umdrehungen des Rotors unterscheiden. Damit ist sichergestellt, dass nur wirklich vergleichbare Perioden miteinander verglichen werden.

Gemäß einem weiteren Aspekt der Erfindung wird ein Computerprogrammprodukt angegeben, das, wenn es auf einem Motorsteuergerät eines Elektromotors ausgeführt wird, das Motorsteuergerät anleitet, das beschriebene Verfahren auszuführen. Es wird zudem ein computerlesbares Medium mit einem solchen Computerprogrammprodukt angegeben.

Das Verfahren kann insbesondere für alle umrichtergesteuerten Elektromotoren verwendet werden, nicht nur, aber insbesondere auch in elektrisch angetriebenen Kraftfahrzeugen. Gemäß einem weiteren Aspekt der Erfindung wird demnach das Verfahren zur Überwachung des Zustands eines Lagers eines Elektromotors in einem Kraftfahrzeug verwendet.

Gemäß einem weiteren Aspekt der Erfindung wird eine Vorrichtung zur Überwachung des Zustands eines einen Elektromotor auf einer Welle führenden Lagers angegeben, welche eine Bestimmungseinheit und eine Vergleichseinheit aufweist.

Die Bestimmungseinheit ist so ausgeführt, dass diese

- ein erstes Maß $m_1$ für einen ersten Abstand $a_1$ in axialer Richtung der Welle und zwischen einem Bezugspunkt an einem Gehäuse des Elektromotos und einem Bezugspunkt an einem Rotor des Elektromotos zu einem ersten Zeitpunkt $t_1$, an dem der Elektromotor ein negatives Drehmoment aufweist, und
- ein zweites Maß $m_2$ für einen zweiten Abstand $a_2$ in axialer Richtung der Welle und zwischen dem Bezugspunkt am Gehäuse und dem Bezugspunkt am Rotor zu einem zweiten Zeitpunkt $t_2$, an dem der Elektromotor ein positives Drehmoment aufweist,

bestimmt.

Die Vergleichseinheit ist so ausgeführt, dass diese die Differenz $m_1\text{-}m_2$ zwischen dem ersten Maß $m_1$ und dem zweiten Maß $m_2$ mit einem Schwellenwert $m_s$, vergleicht und abhängig von dem Vergleichsergebnis von der Differenz $m_1\text{-}m_2$ mit dem Schwellenwert $m_s$ einen kritischen Zustand des Lagers erkennt.

Gemäß einem weiteren Aspekt der Erfindung wird ein Fahrzeug mit einem Elektromotor, einem den Elektromotor auf einer Welle führenden Lager angegeben, welches eine oben beschriebene Vorrichtung zur Überwachung des Zustands des Lagers aufweist.

Vorteilhafte Ausgestaltungen des oben beschriebenen Verfahrens sind, soweit im Übrigen auf die oben beschriebene Vorrichtung beziehungsweise auf das oben beschriebene Fahrzeug übertragbar, auch als vorteilhafte Ausgestaltungen der Vorrichtung beziehungsweise des Fahrzeugs anzusehen.

Im Folgenden sollen nun beispielhafte Ausführungsformen der Erfindung Bezug nehmend auf die beiliegenden Zeichnungen näher erläutert werden. Es zeigen:

Figur 1     schematisch ein Schaltbild eines Elektromotors eines elektrisch angetriebenen Kraftfahrzeugs mit Motorsteuerung;

Figur 2     schematisch einen Schnitt durch den Elektromotor gemäß Figur 1 mit einem Drehwinkelsensor;

Figur 3     zeigt schematisch die Bewegung des Rotors mit der Welle in axialer Richtung;

Figur 4     Signale des Drehwinkelsensors in Abhängigkeit vom Vorzeichen des Drehmoments;

Figur 5     einen Graphen zur Auswertung der Signale des Drehwinkelsensors; und

Figur 6     schematisch das Verfahren einer beispielhaften Ausführungsform in einem Ablaufdiagramm.

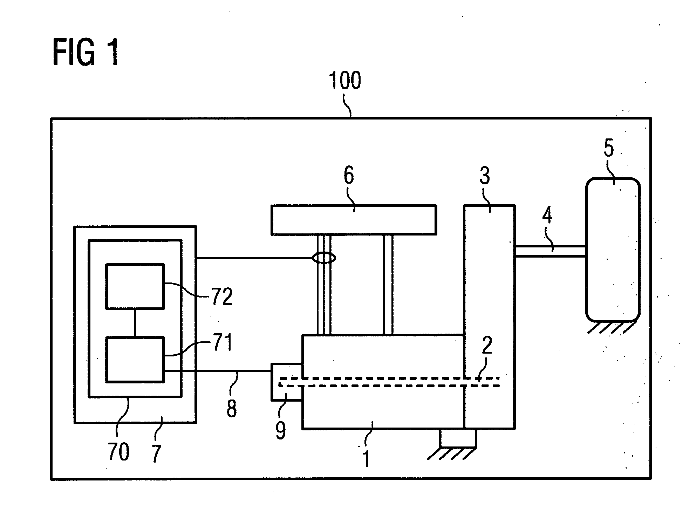

Figur 1 zeigt schematisch einen in einem elektrisch angetriebenen Fahrzeug 100 verbauten Elektromotor 1. Ein in Figur 1 nicht gezeigter Rotor des Elektromotors 1 ist drehfest mit einer Welle 2 verbunden. Die Welle 2 treibt über eine ebenfalls in Figur 1 nicht gezeigte Schrägverzahnung an ihrem einen Ende Zahnräder eines Getriebes 3 an. Neben dem Getriebe 3 können auch eine Kupplung, Nebenaggregate sowie ein ebenfalls zum Antrieb des Kraftfahrzeugs bestimmter Verbrennungsmotor vorgesehen sein. Das durch den Elektromotor 1 erzeugte Drehmoment wird über eine Achswelle 4 auf Räder 5 des Kraftfahrzeugs übertragen.

Zur Steuerung und Regelung des Elektromotors 1 ist ein Motorsteuergerät 7 mit einer Leistungselektronik 6 vorgesehen. Das Motorsteuergerät 7 weist eine Vorrichtung 70 zur Überwachung des Zustands eines den Elektromotor 1 auf einer Welle 2 führenden Lagers 13 auf. Die Vorrichtung 70 umfasst eine Bestimmungseinheit 71 und eine Vergleichseinheit 72.

Die Vorrichtung 70 beziehungsweise die Bestimmungseinheit 71 der Vorrichtung 70 erhält als Eingangsgröße ein Signal über den Drehwinkel 8 des Rotors 10 des Elektromotors 1 in Form von Signalamplitudenwerten, die mittels eines Drehwinkelsensors 9 gemessen werden.

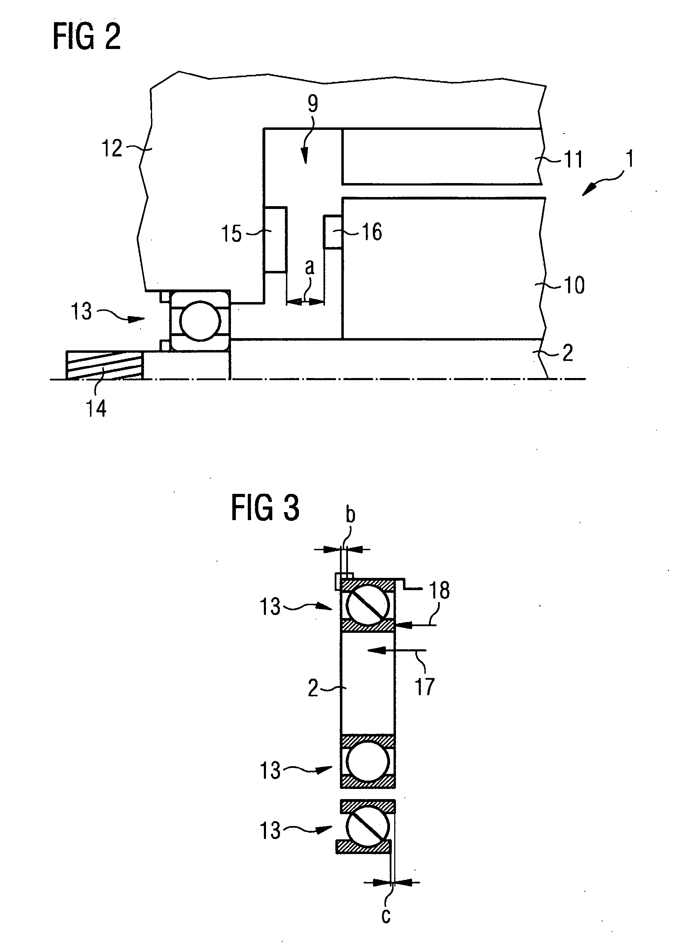

Figur 2 zeigt schematisch die Lagerung des Elektromotors 1 auf der Welle 2. Der Elektromotor 1 weist einen drehfest mit der Welle 2 verbundenen Rotor 10 auf. Ein Stator 11 ist mit einem Gehäuse 12 des Elektromotors 1 verbunden und mittels des Lagers 13 drehbar auf der Welle 2 gelagert.

Die Welle 2 weist an ihrem getriebeseitigen Ende eine Schrägverzahnung 14 auf.

An dem Rotor 10 ist die Sensorspur 16 des Drehwinkelsensors 9 angeordnet. Das die Lage der Sensorspur 16 aufnehmende Sensorelement 15 des Drehwinkelsensors 9 ist am Gehäuse 12 angeordnet. Der Abstand zwischen der Sensorspur 16 und dem Sensorelement 15 wird mit a bezeichnet.

Figur 3 zeigt schematisch die Bewegung des Rotors 10 mit der Welle 2 in axialer Richtung der Welle 2, das heißt in Richtung des Pfeils 17. In ihrem oberen Teil zeigt Figur 3 die Bewegung der Welle 2 als Antwort auf die durch den Pfeil 18 gekennzeichnete axiale Kraft. Die Welle 2 bewegt sich dabei um ein Stück b.

Ein Teil dieser Strecke b wird durch das Lagerspiel c gebildet, das im unteren Teil von Figur 3 gezeigt ist.

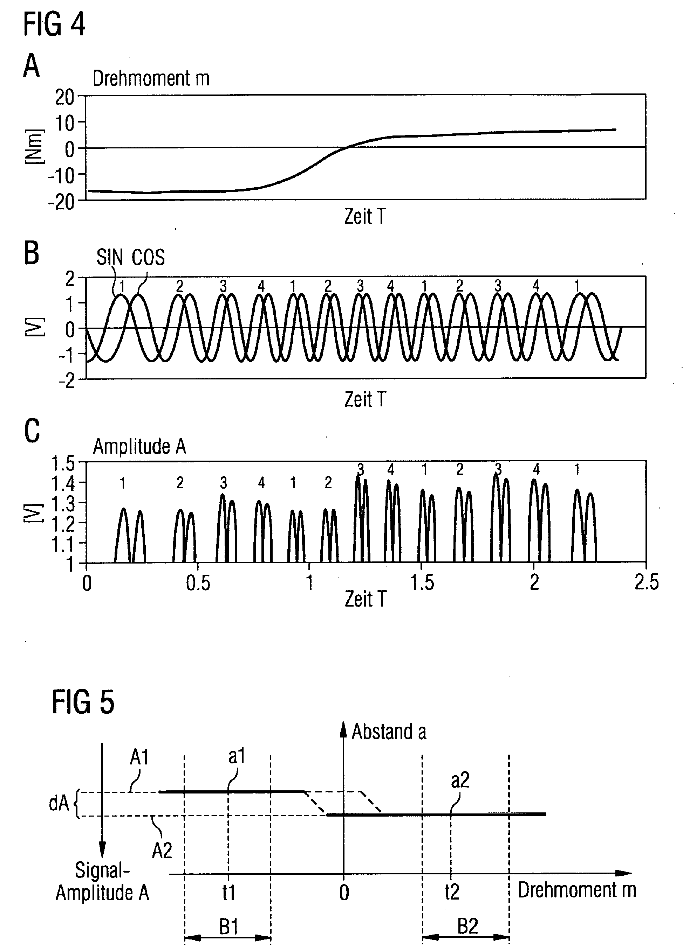

Der Drehwinkelsensor 9 liefert im Betrieb ein Sinus- und ein Cosinus-Signal SIN, COS, aus dem der Drehwinkel und die Drehzahl berechnet werden. Das Sinus- und das Cosinus-Signal SIN, COS sind in Figur 4B veranschaulicht. Die Amplitude dieser beiden Signale SIN, COS ist abhängig vom axialen Abstand a zwischen dem Sensorelement 15 und der Sensorspur 16. Ändert sich das Vorzeichen des Drehmoments des Elektromotors 1, bewegt sich der Rotor 10 mit der Sensorspur 16 in axialer Richtung der Welle 2, so dass sich der Abstand a und damit die Amplitude ändert.

Dies ist in Figur 4 gezeigt, wobei die oberste Kurve in Figur 4A das Drehmoment m, die mittlere Kurve in Figur 4B das Sinus- und das Cosinus-Signal SIN, COS und die unterste Kurve in Figur 4C die Amplituden also Spannungsamplituden V des Sinus- und Cosinus-Signals SIN, COS darstellen.

In der linken Bildhälfte ist das Drehmoment m negativ, die Welle 2 mit dem Rotor 10 ist an den einen Anschlag gedrückt. Der Abstand a ist vergleichsweise klein und damit sind auch die Signalamplituden V klein.

In der rechten Bildhälfte dagegen ist das Drehmoment m positiv geworden, wodurch sich die Welle 2 mit dem Rotor 10 an den anderen Anschlag bewegt hat. Der Abstand a ist vergleichsweise groß, er hat sich um den Betrag $a_1 - a_2$ vergrößert. Damit sind auch die Signalamplituden V groß.

Der verwendete Sensor 9 hat vier Sinus-/Cosinusperioden pro mechanischer Umdrehung, die infolge eines leichten Taumelns nicht ganz gleich sind. Daher wiederholt sich der Kurvenverlauf nach vier Perioden prinzipiell exakt.

Die Amplitudendifferenz zwischen der ersten gemittelten Amplitude in der linken Bildhälfte und der zweiten gemittelten Amplitude in der rechten Bildhälfte ist somit ein Maß für das mechanische Spiel und kann überwacht werden. Dabei können entweder vergleichbare Perioden (hier jede 4. Periode) miteinander verglichen werden oder es werden die über vier Perioden (eine mechanische Umdrehung) gemittelten Amplituden miteinander verglichen. Die beiden Amplituden sowie deren Amplitudendifferenz sind in Figur 5 veranschaulicht.

Figur 5 zeigt einen Graphen zur Auswertung der Signale des Drehwinkelsensors 9. Im Bereich sehr kleiner Drehmomente ist nicht immer sicher, wo sich der Rotor 10 gerade befindet. Es ist eine Mindestkraft aufzuwenden, um die Welle 2 mit dem Rotor 10 in den jeweiligen Anschlag zu bringen. Diese Mindestkraft ist jedoch typischerweise so gering, dass sie unter normalen Fahrbedingungen aufgebracht wird. Diese Aufwertung der Signale erfolgt durch die Bestimmungseinheit 71 der Vorrichtung 70. Als Ergebnis wird die oben genannte Amplitudendifferenz dA durch die Bestimmungseinheit 71 ermittelt.

Sicherheitshalber können jedoch Diagnosebereiche B1, B2 festgelegt werden, für die das Drehmoment groß genug ist, um aussagekräftige Ergebnisse zu liefern. Zu beachten ist bei der Festlegung dieser Bereiche B1, B2 auch ein gewisses Hystereseverhalten im Bereich kleiner Drehmomente und gegebenenfalls eine Unsymmetrie infolge einer Lagervorspannung in eine Richtung. Wie es in Figur 5 dargestellt ist, kann ein erster Diagnosebereich B1 für negative Drehmomente und ein zweiter Diagnosebereich B2 für positive Drehmomente festgelegt werden.

In dem ersten Diagnosebereich B1 für negative Drehmomente des Elektromotos 1 beziehungsweise an einem ersten Zeitpunkt $t_1$ in diesem ersten Diagnosebereich B1 liegt der Bezugspunkt am Gehäuse 12 des Elektromotos 1 mit einem ersten Abstand $a_1$ in axialer Richtung der Welle 2 von einem Bezugspunkt am Rotor 10 des Elektromotos 1 entfernt. In dem zweiten Diagnosebereich B2 für positive Drehmomente des Elektromotos 1 beziehungsweise an einem zweiten Zeitpunkt $t_2$ in diesem zweiten Diagnosebereich B2 liegt der Bezugspunkt am Gehäuse 12 des Elektromotos 1 mit einem zweiten Abstand $a_2$ in axialer Richtung der Welle 2 von dem Bezugspunkt am Rotor 10 des Elektromotos 1 entfernt.

Aus diesen beiden voneinander unterschiedlichen Abständen $a_1$ und $a_2$ resultieren unterschiedliche Signalamplituden $A_1$ und $A_2$ bei dem Drehwinkelsignal 8. Die Amplitudendifferenz dA zwischen der ersten gemittelten Amplitude $A_1$ und der zweiten gemittelten Amplitude $A_2$, wobei gilt: $dA=|A_1-A_2|$, ist somit ein Maß für das mechanische Spiel, nämlich die Veränderung des Abstandes zwischen dem Bezugspunkt am Gehäuse 12 des Elektromotors 1 und dem Bezugspunkt am Rotor 10 des Elektromotors 1, und kann mit einem vorgegebenen Amplitudenschwellwert $A_s$ verglichen werden.

Diese Amplitudendifferenz dA wird anschließend von der Bestimmungseinheit 71 an die Vergleichseinheit 72 weitergeleitet und wird von der Vergleichseinheit 72 mit dem vorgegebenen Amplitudenschwellwert $A_s$ verglichen. Dabei wird auf einen kritischen Zustand des Lagers 13 geschlossen, wenn die Amplitudendifferenz dA den Amplitudenschwellwert $A_s$ überschreitet.

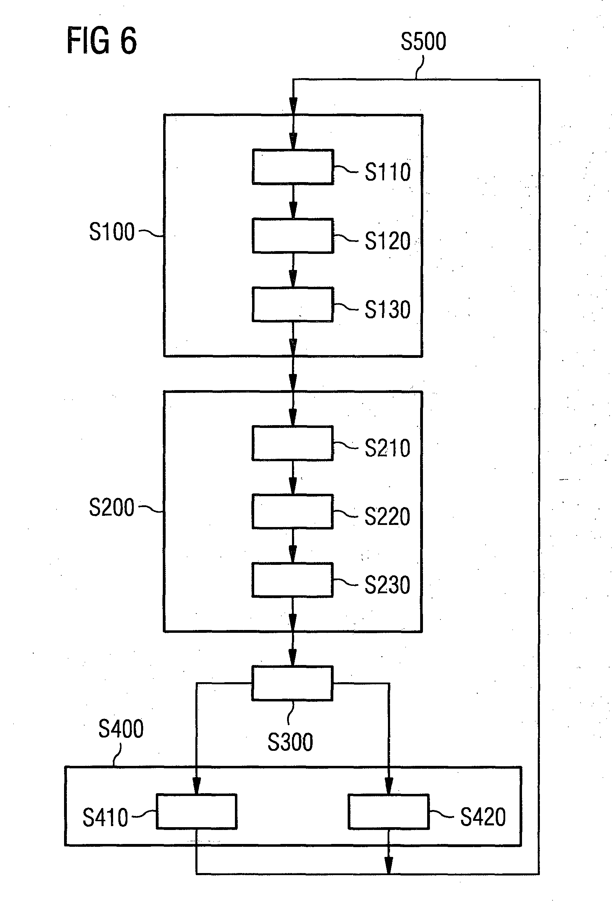

Dies wird beispielhaft gemäß dem Verfahren in Figur 6 durchgeführt. Demnach bestimmt die Bestimmungseinheit 71 gemäß Verfahrensschritt S100 die erste Amplitude $A_1$, indem diese gemäß Verfahrensschritt S110 überprüft, ob das Drehmoment negativ ist und ob die Drehzahl des Elektromotors 1 oberhalb einer vorgegebenen Mindestdrehzahl liegt. Dabei ermittelt die Bestimmungseinheit 71 aus dem von dem Drehwinkelsensor 9 übermittelten Drehwinkelsignal 8 die Drehzahl des Elektromotors 1 und vergleicht diese Drehzahl mit der vorgegebenen Mindestdrehzahl.

Ist das Drehmoment negativ und liegt die ermittelte Drehzahl oberhalb der vorgegebenen Mindestdrehzahl, so wählt die Bestimmungseinheit 71 gemäß Verfahrensschritt S120 aus dem Drehwinkelsignal 8 eine Mehrzahl von Amplituden, die sich voneinander um eine ganzzahlige Anzahl n mechanischer Umdrehungen des Rotors 10 unterscheiden.

Diese Mehrzahl von ausgewählten Amplituden mittelt die Bestimmungseinheit 71 gemäß Verfahrensschritt S130 zu einer gemittelten Amplitude, welche dann als die erste Amplitude $A_1$ zur Überprüfung des Zustands des Lagers 13 herangezogen wird.

Entsprechend bestimmt die Bestimmungseinheit 71 gemäß Verfahrensschritt S200 die zweite Amplitude $A_2$, indem diese gemäß Verfahrensschritt S210 überprüft, ob das Drehmoment positiv ist und ob die Drehzahl des Elektromotors 1 oberhalb der vorgegebenen Mindestdrehzahl liegt; bei positivem Drehmoment und bei Überschreiten der vorgegebenen Mindestdrehzahl durch die ermittelte Drehzahl gemäß Verfahrensschritt S220 aus dem Drehwinkelsignal 8 eine Mehrzahl von Amplituden auswählt; aus der Mehrzahl von ausgewählten Amplituden gemäß Verfahrens schritt S230 die gemittelte zweite Amplitude $A_2$ ermittelt.

Diese erste und zweite Amplituden $A_1$, $A_2$ werden anschließend von der Bestimmungseinheit 71 an die Vergleichseinheit 72 weitergeleitet. Gemäß Verfahrensschritt S300 bildet die Vergleichseinheit 72 eine Differenz $A_1-A_2$ zwischen der ersten und der zweiten Amplitude $A_1$, $A_2$ und vergleicht den Betrag dA der Differenz $A_1-A_2$, wobei gilt: $dA=|A_1-A_2|$, mit dem vorgegebenen Schwellenwert $A_s$.

Abhängig von dem Vergleichsergebnis erkennt die Vergleichseinheit 72 dann gemäß Verfahrensschritt S400, ob ein kritischer Zustand bei dem Lager 13 vorliegt oder nicht.

Dabei wird gemäß Verfahrensschritt S410 auf einen kritischen Zustand des Lagers 13 geschlossen, wenn der Betrag dA der Differenz $A_1-A_2$ den Schwellenwert $A_s$ überschreitet.

Dagegen wird gemäß Verfahrensschritt S420 auf einen fehlerfreien Zustand des Lagers 13 geschlossen, wenn der Betrag dA der Differenz $A_1-A_2$ den Schwellenwert $A_s$ unterschreitet.

Danach, beziehungsweise nach einem vorgegebenen Zeitabstand wird das Verfahren gemäß Verfahrensschritt S500 zurück zu dem anfänglichen Verfahrensschritt S100 zurückgeführt und die Verfahrensschritte von S100 bis S500 werden wiederholt.

Bezugszeichenliste

| 1 | Elektromotor |
|---|---|
| 2 | Welle |
| 3 | Getriebe |
| 4 | Achswelle |
| 5 | Rad |
| 6 | Leistungselektronik |
| 7 | Motorsteuergerät |
| 8 | Drehwinkelsignal |
| 9 | Drehwinkelsensor |
| 10 | Rotor |
| 11 | Stator |
| 12 | Gehäuse |
| 13 | Lager |
| 14 | Schrägverzahnung |
| 15 | Sensorelement |
| 16 | Sensorspur |
| 17 | Pfeil |
| 18 | Pfeil |
| 70 | Vorrichtung zur Überwachung des Zustands des Lagers |
| 71 | Bestimmungseinheit |
| 72 | Vergleichseinheit |
| 100 | Fahrzeug |

**Patentansprüche**

1. Verfahren zur Überwachung des Zustands eines einen Elektromotor (1) auf einer Welle (2) führenden Lagers (13), wobei das Verfahren folgende Verfahrensschritte aufweist:

   - Bestimmung (S100) eines ersten Maßes $m_1$ für einen ersten Abstand $a_1$ zwischen einem Bezugspunkt an einem Gehäuse (12) des Elektromotos (1) und einem Bezugspunkt an einem Rotor (10) des Elektromotos (1) in axialer Richtung der Welle (2) zu einem ersten Zeitpunkt $t_1$, an dem der Elektromotor (1) ein negatives Drehmoment aufweist;
   - Bestimmung (S200) eines zweiten Maßes $m_2$ für einen zweiten Abstand $a_2$ zwischen dem Bezugspunkt am Gehäuse (12) und dem Bezugspunkt am Rotor (10) in axialer Richtung der Welle (2) zu einem zweiten Zeitpunkt $t_2$, an dem der Elektromotor (1) ein positives Drehmoment aufweist;
   - Vergleichen (S300) der Differenz $m_1$-$m_2$ zwischen dem ersten Maß $m_1$ und dem zweiten Maß $m_2$ mit einem Schwellenwert $m_s$,
   - Erkennen (S400) eines kritischen Zustandes des Lagers (13) abhängig von dem Vergleichsergebnis von der Differenz $m_1$-$m_2$ mit dem Schwellenwert $m_s$.

2. Verfahren nach Anspruch 1, wobei auf einen kritischen Zustand des Lagers (13) geschlossen wird (S410), wenn der Absolutwert |m1-m2| der Differenz m1-m2 den Absolutwert $|m_s|$ des Schwellenwertes $m_s$ überschreitet.

3. Verfahren nach Anspruch 1 oder 2, wobei die Bestimmung (S100) des ersten Maßes $m_1$ für den ersten Abstand $a_1$ und/oder die Bestimmung (S200) des zweiten Maßes $m_2$ für den zweiten Abstand $a_2$ nur oberhalb einer vorgegebenen Mindestdrehzahl des Elektromotors (1) durchgeführt wird.

4. Verfahren nach einem der Ansprüche 1 bis 3, wobei als Maße $m_1$, $m_2$ für die Abstände $a_1$, $a_2$ die Abstände $a_1$, $a_2$ selbst verwendet werden.

5. Verfahren nach einem der Ansprüche 1 bis 3, wobei als Maße $m_1$, $m_2$ für die Abstände $a_1$, $a_2$ die Amplituden $A_1$, $A_2$ des Signals eines den Drehwinkel des Elektromotors (1) überwachenden Drehwinkelsensors (9) verwendet werden.

6. Verfahren nach Anspruch 5, wobei zur Bestimmung der Amplituden $A_1$, $A_2$ jeweils die Amplituden des Signals über eine ganzzahlige Anzahl n mechanischer Umdrehungen des Rotors (10) gemittelt werden (S130, S230).

7. Verfahren nach Anspruch 5, wobei zur Bestimmung der Amplituden $A_1$, $A_2$ Amplituden ausgewählt werden (S120, S220), die sich voneinander um eine ganzzahlige Anzahl n mechanischer Umdrehungen des Rotors (10) unterscheiden.

8. Computerprogrammprodukt, das, wenn es auf einem Motorsteuergerät (7) eines Elektromotors (1) ausgeführt wird, das Motorsteuergerät (7) anleitet, ein Verfahren nach einem der Ansprüche 1 bis 7 auszuführen.

9. Vorrichtung (70) zur Überwachung des Zustands eines einen Elektromotor (1) auf einer Welle (2) führenden Lagers (13), wobei die Vorrichtung (70) folgende Merkmale aufweist:

   - eine Bestimmungseinheit (71)

      • zum Bestimmen eines ersten Maßes $m_1$ für einen ersten Abstand $a_1$ zwischen einem Bezugspunkt an einem Gehäuse (12) des Elektromotos (1) und einem Bezugspunkt an einem Rotor (10) des Elektromotos (1) in axialer Richtung der Welle (2) zu einem

ersten Zeitpunkt $t_1$, an dem der Elektromotor (1) ein negatives Drehmoment aufweist; und
• zum Bestimmen eines zweiten Maßes $m_2$ für einen zweiten Abstand $a_2$ zwischen dem Bezugspunkt am Gehäuse (12) und dem Bezugspunkt am Rotor (10) in axialer Richtung der Welle (2) zu einem zweiten Zeitpunkt $t_2$, an dem der Elektromotor (1) ein positives Drehmoment aufweist;

- eine Vergleichseinheit (72)

• zum Vergleichen der Differenz $m_1$-$m_2$ zwischen dem ersten Maß $m_1$ und dem zweiten Maß $m_2$ mit einem Schwellenwert $m_s$, und
• zum Erkennen eines kritischen Zustandes des Lagers (13) abhängig von dem Vergleichsergebnis von der Differenz $m_1$-$m_2$ mit dem Schwellenwert $m_s$.

**10.** Fahrzeug (100) mit

- einem Elektromotor (1),
- einem den Elektromotor (1) auf einer Welle (2) führenden Lager (13),
wobei das Fahrzeug (100) eine Vorrichtung (70) nach Anspruch 9 zur Überwachung des Zustands des Lagers (13) aufweist.


**Claims**

**1.** Method for monitoring the state of a bearing (13) guiding an electric motor (1) on a shaft (2), wherein the method comprises the following method steps:

- determining (S100) a first measure $m_1$ for a first distance $a_1$ between a reference point on a housing (12) of the electric motor (1) and a reference point on a rotor (10) of the electric motor (1) in the axial direction of the shaft (2) with respect to a first time $t_1$ at which the electric motor (1) has a negative torque;
- determining (S200) a second measure $m_2$ for a second distance $a_2$ between the reference point on the housing (12) and the reference point on the rotor (10) in the axial direction of the shaft (2) at a second time $t_2$ at which the electric motor (1) has a positive torque;
- comparing (S300) the difference $m_1$-$m_2$ between the first measure $m_1$ and the second measure $m_2$ with a threshold value $m_s$, and
- detecting (S400) a critical state of the bearing (13) as a function of the comparison result of the difference $m_1$-$m_2$ with the threshold value $m_S$.

**2.** Method according to Claim 1,

wherein a critical state of the bearing (13) is inferred (S410) if the absolute value $|m1-m2|$ of the difference $m1-m2$ exceeds the absolute value $|m_s|$ of the threshold value $m_s$.

**3.** Method according to Claim 1 or 2,
wherein the determination (S100) of the first measure $m_1$ for the first distance $a_1$ and/or the determination (S200) of the second measure $m_2$ for the second distance $a_2$ is carried out only above a predefined minimum rotational speed of the electric motor (1).

**4.** Method according to one of Claims 1 to 3,
wherein the distances $a_1$, $a_2$ themselves are used as measures $m_1$, $m_2$ for the distances $a_1$, $a_2$.

**5.** Method according to one of Claims 1 to 3,
wherein the amplitudes $A_1$, $A_2$ of the signal of a rotational angle sensor (9) which monitors the rotational angle of the electric motor (1) are used as measures $m_1$, $m_2$ for the distances $a_1$, $a_2$.

**6.** Method according to Claim 5,
wherein in each case the amplitudes of the signal, in order to determine the amplitudes $A_1$, $A_2$, are averaged over an integral number n of mechanical revolutions of the rotor (10), (S130, S230).

**7.** Method according to Claim 5,
wherein, in order to determine the amplitudes $A_1$, $A_2$, amplitudes which differ from one another by an integral number n of mechanical revolutions of the rotor (10) are selected (S120, S220).

**8.** Computer program product which, when it is executed on an engine control unit (7) of an electric motor (1), prompts the engine control unit (7) to carry out a method according to one of Claims 1 to 7.

**9.** Device (70) for monitoring the state of a bearing (13) guiding an electric motor (1) on a shaft (2), wherein the device (70) has the following features:

- a determining unit (71),

• for determining a first measure $m_1$ for a first distance $a_1$ between a reference point on a housing (12) of the electric motor (1) and a reference point on a rotor (10) of the electric motor (1) in the axial direction of the shaft (2) with respect to a first time $t_1$ at which the electric motor (1) has a negative torque; and
• for determining a second measure $m_2$ for a second distance $a_2$ between the reference point on the housing (12) and the reference point on the rotor (10) in the axial direction of the shaft (2) at a second time $t_2$ at which

the electric motor (1) has a positive torque;

- a comparator unit (72)

• for comparing the difference $m_1$-$m_2$ between the first measure $m_1$ and the second measure $m_2$ with a threshold value $m_s$, and
• for detecting a critical state of the bearing (13) as a function of the comparison result of the difference $m_1$-$m_2$ with the threshold value $m_s$.

10. Vehicle (100) having

- an electric motor (1),
- a bearing (13) guiding the electric motor (1) on a shaft (2),
wherein the vehicle (100) has a device (70) according to Claim 9 for monitoring the state of the bearing (13).

## Revendications

1. Procédé permettant de surveiller l'état d'un palier (13) guidant un moteur électrique (1) sur un arbre (2), le procédé comprenant les étapes de procédé suivantes :

- détermination (S100) d'une première grandeur $m_1$ associée à une première distance $a_1$ entre un point de référence sur un logement (12) du moteur électrique (1) et un point de référence sur un rotor (10) du moteur électrique (1) dans la direction axiale de l'arbre (2) à un premier instant $t_1$ auquel le moteur électrique (1) présente un couple négatif ;
- détermination (S200) d'une deuxième grandeur $m_2$ associée à une deuxième distance $a_2$ entre le point de référence sur le logement (12) et le point de référence sur le rotor (10) dans la direction axiale de l'arbre (2) à un deuxième instant $t_2$ auquel le moteur électrique (1) présente un couple positif ;
- comparaison (S300) de la différence $m_1$-$m_2$ entre la première grandeur $m_1$ et la deuxième grandeur $m_2$ avec une valeur de seuil $m_s$;
- détection (S400) d'un état critique du palier (13) en fonction du résultat de la comparaison de la différence $m_1$-$m_2$ avec la valeur de seuil $m_s$.

2. Procédé selon la revendication 1,
dans lequel il est conclu (S410) à un état critique du palier (13) lorsque la valeur absolue |m1-m2| de la différence m1-m2 dépasse la valeur absolue |ms| de la valeur de seuil $m_s$.

3. Procédé selon la revendication 1 ou 2,

dans lequel la détermination (S100) de la première grandeur $m_1$ pour la première distance $a_1$ et/ou la détermination (S200) de la deuxième grandeur $m_2$ pour la deuxième distance $a_2$ est (sont) uniquement exécutée(s) au-dessus d'une vitesse de rotation prédéfinie du moteur électrique (1).

4. Procédé selon l'une des revendications 1 à 3, dans lequel les distances $a_1$, $a_2$ elles-mêmes sont utilisées en tant que grandeurs $m_1$, $m_2$ associées aux distances $a_1$, $a_2$.

5. Procédé selon l'une des revendications 1 à 3, dans lequel les amplitudes $A_1$, $A_2$ du signal d'un capteur d'angle de rotation (9) surveillant l'angle de rotation du moteur électrique (1) sont utilisées en tant que grandeurs $m_1$, $m_2$ associées aux distances $a_1$, $a_2$.

6. Procédé selon la revendication 5,
dans lequel pour déterminer les amplitudes $A_1$, $A_2$, les amplitudes du signal sont à chaque fois mises à la moyenne sur un nombre entier n de révolutions mécaniques du rotor (10) (S130, S230).

7. Procédé selon la revendication 5,
dans lequel pour déterminer les amplitudes $A_1$, $A_2$, des amplitudes qui se distinguent l'une de l'autre d'un nombre entier n de révolutions mécaniques du rotor (10) sont sélectionnées (S120, S220).

8. Produit de programme informatique qui, lorsqu'il est exécuté dans un dispositif de commande de moteur (7) d'un moteur électrique (1), donne l'instruction au dispositif de commande de moteur (7) d'exécuter un procédé selon l'une des revendications 1 à 7.

9. Dispositif (70) permettant de surveiller l'état d'un palier (13) guidant un moteur électrique (1) sur un arbre (2), le dispositif (70) présentant les caractéristiques suivantes :

- une unité de détermination (71)

• permettant de déterminer une première grandeur $m_1$ associée à une première distance $a_1$ entre un point de référence sur un logement (12) du moteur électrique (1) et un point de référence sur un rotor (10) du moteur électrique (1) dans la direction axiale de l'arbre (2) à un premier instant $t_1$ auquel le moteur électrique (1) présente un couple négatif ; et
• permettant de déterminer une deuxième grandeur $m_2$ associée à une deuxième distance $a_2$ entre le point de référence sur le logement (12) et le point de référence sur le rotor (10) dans la direction axiale de l'arbre (2) à un deuxième instant $t_2$ auquel le moteur électrique (1) présente un couple positif ;

- une unité de comparaison (72)

    • permettant de comparer la différence $m_1$-$m_2$ entre la première grandeur $m_1$ et la deuxième grandeur $m_2$ avec une valeur de seuil $m_s$; et
    • permettant de détecter un état critique du palier (13) en fonction du résultat de la comparaison de la différence $m_1$-$m_2$ avec la valeur de seuil $m_s$.

**10.** Véhicule (100) comprenant :

- un moteur électrique (1),
- un palier (13) guidant le moteur électrique (1) sur un arbre (2),
le véhicule (100) présentant un dispositif (70) selon la revendication 8 pour surveiller l'état du palier (13).

# FIG 1

FIG 2

FIG 3

## FIG 4

**A**

Drehmoment m

**B**

SIN COS

**C**

Amplitude A

## FIG 5

# FIG 6

S500

S100

S110

S120

S130

S200

S210

S220

S230

S300

S400

S410

S420

**EP 2 786 110 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10210372 A1
- DE 102007011733 A1

- WO 2011011573 A1